(19) Europäisches Patentamt
European Patent Office
Office européen des brevets

(11) Veröffentlichungsnummer: 0 289 780
A2

(12) **EUROPÄISCHE PATENTANMELDUNG**

(21) Anmeldenummer: 88105031.4

(22) Anmeldetag: 29.03.88

(51) Int. Cl.[4]: C08L 71/04 , C08L 33/24 , C08L 35/00 , C08L 39/04 , C08L 37/00 , C08L 51/04

(30) Priorität: 07.04.87 DE 3711757

(43) Veröffentlichungstag der Anmeldung: 09.11.88 Patentblatt 88/45

(84) Benannte Vertragsstaaten: BE DE FR GB NL

(71) Anmelder: BASF Aktiengesellschaft
Carl-Bosch-Strasse 38
D-6700 Ludwigshafen(DE)

(72) Erfinder: Taubitz, Christof, Dr.
In der Dreispitz 15
D-6706 Wachenheim(DE)
Erfinder: Seiler, Erhard, Dr.
Erpolzheimer Strasse 1
D-6700 Ludwigshafen(DE)
Erfinder: Gausepohl, Hermann, Dr.
Neuweg 10
D-6704 Mutterstadt(DE)
Erfinder: Boehlke, Klaus, Dr.
Gerhart-Hauptmann-Strasse 53
D-6717 Hessheim(DE)
Erfinder: Bueschl,Rainer, Dr.
Hollandstrasse 14
D-6701 Roedersheim-Gronau(DE)

(54) **Thermoplastische Formmassen auf Basis von Polyphenylenether.**

(57) Thermoplastische Formmassen, enthaltend als wesentliche Komponenten

A) 3 bis 97 Gew.-Teile, bezogen auf die Summe der Komponenten A und B, eines in der Schmelze modifizierten Polyphenylenethers aus

$a_1$) 70 bis 99,95 Gew.-%, bezogen auf A, eines Polymeranteils, der mindestens 30 Gew.-%, bezogen auf $a_1$, Polyphenylenether und höchstens 70 Gew.-%, bezogen auf $a_1$, eines vinylaromatischen Polymeren enthält,

$a_2$) 0,05 bis 10 Gew.-%, bezogen auf A,

$a_{21}$) eines amidgruppenhaltigen Monomeren mit einer polymerisierbaren Doppelbindung,
$a_{22}$) eines lactamgruppenhaltigen Monomeren mit einer polymerisierbaren Doppelbindung und/oder
$a_{23}$) einer $\alpha,\beta$-ungesättigten Dicarbonylverbindung und

$a_3$) 0 bis 20 Gew.%, bezogen auf A, eines weiteren Comonomeren, das unter den Herstellungsbedingungen mit $a_1$ reagieren kann,

und

B) 3 bis 97 Gew.-Teile, bezogen auf die Summe von A und B, eines Pfropfmischpolymerisates aus 30 bis 90 Gew.-%, bezogen auf B, eines Butadien-oder Acrylatkautschukes mit einer Glastemperatur von unter 0°C als Pfropfgrundlage und 10 bis 70 Gew.-%, bezogen auf B, eines in Gegenwart der Pfropfgrund-

EP 0 289 780 A2

lage aus

- 30 bis 90,9 Gew.-% eines vinylaromatischen Kohlenwasserstoffs mit 8 bis 12 C-Atomen ($b_1$),

- 9 bis 40 Gew.-% eines nitrilgruppenhaltigen ethylenisch ungesättigten Monomeren mit 3 bis 6 C-Atomen ($b_2$),

- 0,1 bis 30 Gew.-% eines ethylenisch ungesättigten Monomeren $b_3$ mit mindestens einer Epoxy-oder Hydroxylgruppe oder eines Gemisches dieser Monomerer und

- 0 bis 30 Gew.%, jeweils bezogen auf die Summe von $b_1$ bis $b_4$ mindestens eines von $b_1$ bis $b_3$ verschiedenen, copolymerisierbaren, ethylenisch ungesättigten Monomeren $b_4$

hergestellten Copolymerisates $B_1$ als Pfropfhülle, wobei die Summe der Komponenten A und B 100 Gew.-Teile ergibt,

und deren Herstellung.

# Thermoplastische Formmassen auf Basis von Polyphenylenether

Die Erfindung betrifft thermoplastische Formmassen, enthaltend als wesentliche Komponenten

A) 3 bis 97 Gew.-Teile, bezogen auf die Summe der Komponenten A und B, eines in der Schmelze modifizierten Polyphenylenethers aus

$a_1$) 70 bis 99,95 Gew.-%, bezogen auf A, eines Polymeranteils, der mindestens 30 Gew.-%, bezogen auf $a_1$, Polyphenylenether und höchstens 70 Gew.-%, bezogen auf $a_1$, eines vinylaromatischen Polymeren enthält,

$a_2$) 0,05 bis 10 Gew.-%, bezogen auf A,

$a_{21}$) eines amidgruppenhaltigen Monomeren mit einer polymerisierbaren Doppelbindung,

$a_{22}$) eines lactamgruppenhaltigen Monomeren mit einer polymerisierbaren Doppelbindung und/oder

$a_{23}$) einer $\alpha,\beta$-ungesättigten Dicarbonylverbindung und

$a_3$) 0 bis 20 Gew.%, bezogen auf A, eines weiteren Comonomeren, das unter den Herstellungsbedingungen mit $a_1$ reagieren kann,

und

B) 3 bis 97 Gew.-Teile, bezogen auf die Summe von A und B, eines Pfropfmischpolymerisates aus 30 bis 90 Gew.-%, bezogen auf B, eines Butadien-oder Acrylatkautschukes mit einer Glastemperatur von unter 0°C als Pfropfgrundlage und 10 bis 70 Gew.-%, bezogen auf B, eines in Gegenwart der Pfropfgrundlage aus

- 30 bis 90,9 Gew.-% eines vinylaromatischen Kohlenwasserstoffs mit 8 bis 12 C-Atomen ($b_1$),

- 9 bis 40 Gew.-% eines nitrilgruppenhaltigen ethylenisch ungesättigten Monomeren mit 3 bis 6 C-Atomen ($b_2$),

- 0,1 bis 30 Gew.-% eines ethylenisch ungesättigten Monomeren $b_3$ mit mindestens einer Epoxid-oder Hydroxylgruppe oder eines Gemisches dieser Monomerer und

- 0 bis 30 Gew.%, jeweils bezogen auf die Summe von $b_1$ bis $b_4$, mindestens eines von $b_1$ bis $b_3$ verschiedenen, copolymerisierbaren, ethylenisch ungesättigten Monomeren $b_4$

hergestellten Copolymerisates $B_1$ als Pfropfhülle, wobei die Summe der Komponenten A und B 100 Gew.-Teile ergibt.

Thermoplastische Formmassen, die Styrolpolymerisate und Polyphenylenether (PPE) enthalten, sind z.B. aus den US-Patentschriften 3 383 435, 4 128 602 sowie 4 128 603 bekannt. Solche Formmassen eignen sich zur Herstellung von Formteilen, die eine bessere Wärmeformbeständigkeit haben als solche Formteile, die kein Polyphenylenether enthalten.

Es ist in der US-Patentschrift 4 360 618 vorgeschlagen worden, Styrolpolymerisate, die 2 bis 8 Gew.% Acrylnitril einpolymerisiert enthalten, zur Herstellung von Formteilen zu verwenden. Es zeigte sich jedoch, daß schon bei höheren Acrylnitrilgehalten, die über 8,5 Gew.% liegen, eine Unverträglichkeit mit dem Polyphenylenether (PPE) auftritt, so daß Formkörper mit schlechten mechanischen Werten aus derartigen Mischungen erhalten werden. Formmassen, die PPE und Styrolacrylnitrilcopolymerisate mit höheren Gehalten an Acrylnitril (SAN), die gegebenenfalls schlagzäh modifiziert sind, haben sich daher bislang nicht eingeführt.

In der US-Patentschrift 4 387 189 werden Copolymerisate aus Styrol und Säure-, Säureanhydrid-oder Säurechlorid-Comonomeren, die gegebenenfalls Acrylnitril enthalten können, mit PPE umgesetzt. Nachteilig ist die nichtausreichende mechanische Stabilität der Formkörper, besonders wenn die Copolymeren Acrylnitril enthalten, was vermutlich in der geringen Reaktivität der Comonomeren zum PPE bei Anwesenheit von Acrylnitril begründet ist. Dies gilt insbesondere dann, wenn das Copolymere durch gepfropfte Butadien-oder Acrylatkautschuke schlagzäh modifiziert ist.

In den EP-B 156 990, EP-A 170 946 und EP-A 200 185 werden spezielle Pfropfcopolymerisate, die aus PPE und Styrolacrylnitril-Copolymerisaten mit besonderen Monomerbausteinen unter Zuhilfenahme spezieller Kopplungsmittel erhalten wurden, mit verbesserten mechanischen Eigenschaften beschrieben.

Ungünstig sind dabei jedoch die noch nicht befriedigenden mechanischen Eigenschaften der Formmassen und der daraus hergestellten Formteile bzw. die technisch aufwendige Produktion der Formmassen über die Herstellung der speziellen Copolymerisate und die anschließende Kopplungsreaktion in organischen Lösungsmitteln.

Die Flammfestausrüstung von thermoplastischen Kunststoffen ist aus Vogel, "Flammfestmachen von Kunststoffen", Hüthig-Verlag, Heidelberg (1966), Seiten 94 bis 102; Troitzsch, "Brandverhalten von Kunststoffen", Hanser-Verlag, München (1982), Seiten 1 bis 65; Hirschler, "Developments in Polymer Stabilization", Band 5, Editor G. Scott, Applied Science Publishers, London (1982), Seiten 107 bis 151 bekannt. Bei Anwendung verhältnismäßig großer Mengen an Halogen enthaltenden Flammschutzmitteln und unter gleichzeitiger Anwendung von Synergisten, tropfen Thermoplaste nach dem Beflammen mit einer heißen Flamme nichtbrennend ab und verlöschen von selbst. Dieser Effekt des Selbstverlöschens tritt ohne die Anwendung eines Synergisten erst nach Zugabe einer weitaus größeren Menge an Halogen enthaltenden Flammschutzmitteln ein. So ausgerüstete Formmassen zeigen Nachteile, die vom Verarbeiter meist nicht toleriert werden. Charakteristisch sind z.B. die Verfärbung der Formmassen sowie die Korrosion von Verarbeitungsmaschinen.

Ohne Verwendung von Synergisten muß die Flammschutzmittelmenge erhöht werden, was zu einer starken Beeinträchtigung der damit ausgerüsteten Thermoplaste und aufgrund einer deutlichen Absenkung der Wärmeformbeständigkeit zu brennendem Abtropfen führt. Diese Probleme können mithin nur durch eine Senkung der Menge an halogenhaltigen Flammschutzmitteln gelöst werden. Häufig erreichen die Thermoplaste dann jedoch nicht mehr die Einstufung UL 94 VO oder UL 94 V1.

Außer der vorstehend angeführten Möglichkeit, thermoplastische Kunststoffe mit Halogen enthaltenden Flammschutzmitteln auszurüsten, gibt es auch die Möglichkeit eines halogenfreien Flammschutzes. So sind aus der DE-A 3 432 749, der DE-A 3 432 750 und der DE-A 3 526 549 selbstverlöschende, halogenfreie Formmassen auf Basis von PPE und Styrol-Acrylnitrilpolymerisaten bekannt. Ungünstig sind dabei jedoch die noch nicht befriedigenden mechanischen Eigenschaften der Formmassen und der daraus hergestellten Formteile bzw. die technisch aufwendige Produktion der Formmassen über die Herstellung der speziellen Copolymerisate und die anschließende Kopplungsreaktion in organischen Lösungsmitteln.

Der vorliegenden Erfindung lag daher die Aufgabe zugrunde, auf Basis von Polyphenylenether thermoplastische Formmassen bereitzustellen, die die geschilderten Nachteile vermeiden, einfach herzustellen sind und zu Formkörpern mit guten mechanischen Eigenschaften verarbeitet werden können.

Diese Aufgabe wurde erfindungsgemäß gelöst durch die eingangs definierten thermoplastischen Formmassen.

Außerdem wurden spezielle Ausgestaltungen der Formmassen gemäß der Unteransprüche und ein Verfahren zu ihrer Herstellung gefunden.

Im folgenden werden die Formmassen im Einzelnen beschrieben.

Es versteht sich dabei von selbst, daß für selbstverlöschende halogenfreie thermoplastische Formmassen nur solche Komponenten in Frage kommen, die ihrerseits halogenfrei, d.h. bis auf Spuren frei von Halogen sind.

Als Komponente A enthalten die erfindungsgemäßen Formmassen 3 bis 97, vorzugsweise 10 bis 90, insbesondere 40 bis 90 Gew.-Teile, bezogen auf die Summe der Komponenten A und B, mindestens eines modifizierten Polyphenylenethers, der unter Verwendung der Komponenten $a_1$ und $a_2$ hergestellt wird. Unter "modifiziert" soll dabei eine durch die Umsetzung der Komponenten $a_1$ mit $a_2$ bzw. $a_3$ hervorgerufene Veränderung von $a_1$ verstanden werden.

Bei der Komponente $a_1$ handelt es sich um einen Polymeranteil, der mindestens 30, bevorzugt mehr als 50, insbesondere mehr als 60 Gew.%, bezogen auf $a_1$, Polyphenylenether und höchstens 70, bevorzugt weniger als 50, insbesondere weniger als 40 Gew.%, bezogen auf $a_1$, eines vinylaromatischen Polymeren enthält. Für halogenfreie, selbstverlöschende Formmassen ist es insbesondere von Vorteil, mehr als 90 Gew.% PPE und weniger als 10 Gew.%, jeweils bezogen auf $a_1$, des vinylaromatischen Polymeren zu verwenden.

Polyphenylenether ist an sich bekannt, er kann beispielsweise durch oxidative Kupplung aus in o-Position disubstituierten Phenolen hergestellt werden. Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Die eingesetzten Polyphenylenether weisen im allgemeinen eine relative Viskosität von 0,4 bis 0,7 dl/g, gemessen in 1 gew.%iger Lösung in Chloroform bei 30°C auf.

Nur beispielsweise seien hier einige Polyphenylenether angeführt, wie sie u.a. in O. Olabisi, l.c., S. 224 bis 230 und 245 genannt werden wie

Poly(2,6-diethyl-1,4-phenylen)oxid,
Poly(2-methyl-6-ethyl-1,4-phenylen)oxid,
Poly(2-methyl-6-propyl-1,4-phenylen)oxid,
Poly(2,6-dipropyl-1,4-phenylen)oxid,

Poly(2-ethyl-6-propyl-1,4-phenylen)oxid, bevorzugt Poly(2,6-dimethyl-1,4-phenylen)oxid oder Copolymere, wie solche, die 2,3,6-Trimethylphenol enthalten, außerdem Polymermischungen. Besonders bevorzugt ist jedoch Poly(2,6-dimethyl-1,4-phenylen)oxid.

Das vinylaromatische Polymer ist vorzugsweise mit dem eingesetzten Polyphenylenether verträglich. Die relative Viskosität dieser Polymere liegt im allgemeinen im Bereich von 0,3 bis 0,7 dl/g, gemessen in 1gewichtsprozentiger Lösung in $CHCl_3$ bei 30°C.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, α-Methylstyrol oder p-Methylstyrol genannt; in untergeordneten Anteilen (vorzugsweise nicht mehr als 20, insbesondere nicht mehr als 8 Gew.%, bezogen auf die Polymeren), können auch Comonomere wie (Meth)acrylnitril oder (Meth)acrylsäureester am Aufbau beteiligt sein. Ein besonders bevorzugtes vinylaromatisches Polymeres ist Polystyrol. Es versteht sich, daß auch Mischungen dieser Polymere eingesetzt werden können.

Die vinylaromatischen Polymeren weisen im allgemeinen einen Schmelzindex (MFI (200°C/5 kg), gemessen nach DIN 53735) von 1 bis 30, insbesondere von 15 bis 25 g/10 min auf.

Verfahren zur Herstellung solcher vinylaromatischer Polymeren sind an sich bekannt und in der Literatur beschrieben, so daß sich hier nähere Angaben erübrigen. Nur beispielsweise seien hier als geeignete Polymerisationsverfahren die Masse-, Suspensions-, Emulsions-oder Lösungspolymerisation erwähnt.

Der Anteil der Komponente $a_1$ an der Komponente A liegt im Bereich von 70 bis 99,95, vorzugsweise 82 bis 99,9 und insbesondere 95 bis 99,8 Gew.%, bezogen auf A.

Als wesentliche Komponente $a_2$ enthält der modifizierte Polyphenylenether A mindestens eine der Verbindungen $a_{21}$ bis $a_{23}$. Prinzipiell können auch Mischungen verschiedener Verbindungen $a_{21}$ bis $a_{23}$ eingesetzt werden, doch ist im allgemeinen die Verwendung nur einer dieser Verbindungsarten vorteilhaft.

Der Anteil der Komponente $a_2$ beträgt 0,05 bis 10, vorzugsweise 0,1 bis 8, insbesondere 0,2 bis 5 Gew.%, bezogen auf die Komponente A.

Als Komponente $a_2$ sind mindestens eine Amidgruppe enthaltende Monomere mit mindestens einer polymerisierbaren Doppelbindung ($a_{21}$) geeignet, vorzugsweise solche der allgemeinen Formeln I oder II

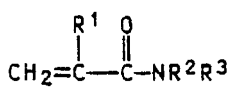

(I)

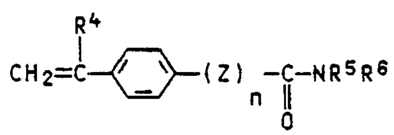

(II) ,

wobei $R^1$, $R^2$, $R^3$, $R^4$, $R^5$ und $R^6$ Wasserstoff, Alkyl-oder Cycloalkylgruppen mit bis zu 12 C-Atomen oder Arylgruppen und Z Alkylengruppen mit 1 bis 12 C-Atomen darstellen und n den Wert 0 oder 1, vorzugsweise 0 hat.

Bevorzugte Substituenten $R^1$, $R^2$, $R^3$, $R^4$, $R^5$ und $R^6$ sind Wasserstoff, Alkylgruppen mit 1 bis 10 C-Atomen, Cycloalkylgruppen mit bis zu 8 C-Atomen oder Arylgruppen, z.B. Phenyl. $R^1$ und $R^4$ sind insbesondere H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N-(2-ethylhexyl)-acrylamid, N-Cyclohexylacrylamid, N-Phenylacrylamid, die entsprechenden N,N-Derivate wie N,N-Dimethylacrylamid und die entsprechenden Methacrylamide sowie deren Mischungen genannt. Bevorzugt werden Acrylamid, Methacrylamid, N-Phenylacrylamid und N-Phenylmethacrylamid verwendet.

Als Komponente $a_2$ kann auch ein mindestens eine Lactam-Gruppe enthaltendes Monomer mit mindestens einer polymerisierbaren Doppelbindung ($a_{22}$) eingesetzt werden. Vorzugsweise werden Lactame der allgemeinen Struktur III

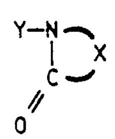

(III)

eingesetzt, wobei X eine lineare verzweigte Alkylengruppe mit 2 bis 15 C-Atomen darstellt und Y die

allgemeinen Formel

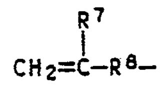

hat, wobei $R^7$ ein Wasserstoffatom, eine Alkyl-oder Alkoxygruppe mit 1 bis 4 C-Atomen und $R^8$ einen zweibindigen Substituenten

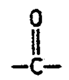 ,

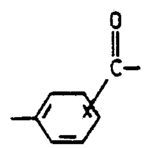 oder

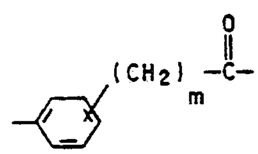 ,

wobei m eine ganze Zahl von 1 bis 4 ist, darstellen. Bevorzugte Substituenten Y sind ganz allgemein Vinyl-, Acryloyl-, Methacryloyl-oder Reste mit Styrol-Grundstrukturen, insbesondere der Acryloyl-oder Methacryloylrest.

Bevorzugt sind Lactameinheiten, die zu Polyamiden polymerisierbar oder copolymerisierbar sind, wie dies in Houben-Weyl, Methoden der organ. Chemie, Band XI/2, S. 511 bis 587, (1958) und Band XIV/2, S. 111 bis 131, (1963) beschrieben wird. Beispielsweise seien β-Propiolactame wie 3,3'-Dimethyl-3-propiolactam, genannt. Ebenfalls bevorzugte Lactam-Einheiten sind Pyrrolidon und ε-Caprolactam, außerdem 7-Önantholactam, 8-Capryllactam und 12-Laurinlactam, wie sie bei K. Dachs, Angewandte Chemie, 74, 540 bis 545, (1962) beschrieben werden. Es können auch Mischungen dieser Verbindungen eingesetzt werden.

Als besonders bevorzugtes Beispiel einer Komponente $a_{22}$ sei hier nur N-(Meth)acryloyl-ε-caprolactam

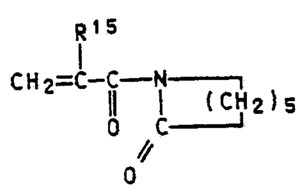

genannt, wobei $R^{15}$ ein Wasserstoffatom oder eine Methylgruppe sein kann.

Bei der Komponente $a_{23}$ handelt es sich um α,β-ungesättigte Dicarbonylverbindungen, bevorzugt solche der allgemeinen Formel IV

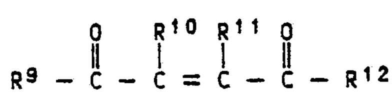 (IV),

wobei

$R^9$ und $R^{12}$ Hydroxylgruppen, Aroxy-, Alkoxy-, Aralkoxy-oder Cycloalkoxygruppen mit bis zu 12 C-Atomen, $-NR^{13}R^{14}$ oder gemeinsam -O-oder $-NR^{13}-$,

$R^{10}$ und $R^{11}$ Wasserstoff oder, wenn $R^{10}$ und $R^{11}$ Wasserstoff ist, eine Alkyl-oder Cycloalkylgruppe mit bis zu 12 C-Atomen, eine Arylgruppe, gemeinsam eine Alkylengruppe mit 4 C-Atomen oder bei halogenhaltigen Formmassen auch Chlor,

$R^{13}$ und $R^{14}$ Wasserstoff, Alkyl-oder Cycloalkylgruppen, Aralkyl-oder Arylgruppen mit bis zu 12 C-Atomen, die ihrerseits durch $C_1$-$C_4$-Alkyl-oder Alkoxygruppen substituiert sein können, darstellen.

Die Substituenten müssen, was sich allerdings von selbst versteht, so beschaffen sein, daß sie die Modifizierungsreaktion nicht verhindern. Es handelt sich daher im allgemeinen um $\alpha,\beta$-ungesättigte Dicarbonsäuren, deren Anhydride, Imide, um Monoester oder Monoamide dieser Dicarbonsäuren, ihre Diester oder Diamide.

Als Beispiele für Dicarbonsäuren seien Maleinsäure, Fumarsäure, Methylmaleinsäure, Butenylbernsteinsäure, Tetrahydrophthalsäure und bei halogenhaltigen Formmassen auch Chlormaleinsäure genannt, von denen Maleinsäure und Fumarsäure besonders bevorzugt werden.

Als Anhydride seien beispielhaft erwähnt Maleinsäureanhydrid, Methylmaleinsäureanhydrid und bei halogenhaltigen Formmassen auch Chlormaleinsäureanhydrid.

Bevorzugte Imide leiten sich von der Maleinsäure ab. Die Substituenten $R^{10}$, $R^{11}$ und $R^{13}$ sind dabei Alkylgruppen mit 1 bis 4 C-Atomen, beispielsweise Methyl-, Ethyl-oder n-, i-oder t-Butyl, Cycloakylgruppen mit bis zu 8 C-Atomen oder Phenylgruppen, die im Falle von $R^{13}$ alkyl-oder alkoxysubstituiert sein können. Nur beispielhaft seien als Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)maleinimid, N-Benzylmaleinimid, N-(1-Naphthyl)maleinimid oder deren Mischungen genannt. Von diesen wird N-Phenylmaleinimid besonders bevorzugt.

Bevorzugte Halbester und Halbamide leiten sich von der Maleinsäure ab.

Die Halbester leiten sich bevorzugt von primären und sekundären Monoalkoholen, wie Methanol, Ethanol, n-und i-Propanol, n-und i-Butanol, Pentanole, Hexanole, Heptanole, Octanole, z.B. 2-Ethylhexylalkohol und von höheren Alkoholen wie Dodecanolen und cycloaliphatischen Alkoholen, z.B. Cyclohexanol ab. Weiter eignen sich auch Alkohole mit aromatischen Struktureinheiten wie z.B. Benzylalkohol. Bevorzugt werden jedoch Alkanole mit 1 bis 6 C-Atomen. Als Amine zur Herstellung der erfindungsgemäß eingesetzten Halbamide seien ganz allgemein sekundäre Amine und N-Alkylaniline genannt. Beispiele hierfür sind N-Methyl-oder N-Ethylalkylamine oder N-Methylanilin. Ganz allgemein werden Halbester den Halbamiden vorgezogen.

Formmassen, die als Komponente $a_{23}$ einen Halbester oder ein Halbamid der Maleinsäure enthalten, weisen häufig besonders gute Fließeigenschaften, d.h. besonders hohe Schmelzindex-Werte (MFI) auf.

Als $a_3$ kommen weitere, bevorzugt nicht vinylaromatische Comonomere in Frage, die unter den Herstellungsbedingungen mit der Komponente $a_1$ reagieren bzw. auf diese aufpfropfen. Beispielsweise seien hier Acrylsäure, Methacrylsäure, Acrylate, Methacrylate und daneben auch vinylaromatische Monomere wie Styrol, $\alpha$-Methylstyrol und Vinyltoluol genannt, um nur einige aufzuführen. Der Anteil der Komponente $a_3$ beträgt 0 bis 20, vorzugsweise 0 bis 10 Gew.%, bezogen auf die Komponente A. Besonders bevorzugt werden jedoch Formmassen, bei deren Herstellung keine dieser weiteren Comonomeren verwendet wurden.

Bei der Herstellung der modifizierten Polyphenylenether A können bis zu 20 Gew.%, bezogen auf A, an Radikalstartern eingesetzt werden.

Der Anteil der Radikalstarter ist in der Regel geringer als die Summe der verwendeten monomeren Verbindungen $a_2$. Im allgemeinen handelt es sich dabei um ein organisches Peroxid oder eine Azo-Verbindung. Verwendet werden z.B. organische Peroxide mit einer Halbwertzeit im Bereich von 0,1 bis 3000 s bei 200°C. Die Wahl des Radikalstarters richtet sich nach der gewünschten Reaktionstemperatur. Beispielsweise seien als Radikalstarter tert.-Butylperoxid und Dicumylperoxid genannt.

Häufig, insbesondere bei Temperaturen über 265°C, hat es sich als vorteilhaft erwiesen, ohne Zugabe von Radikalstartern, d.h. in Abwesenheit oder praktischer Abwesenheit von Radikalstartern zu arbeiten. Dies gilt insbesondere dann, wenn als Komponente $a_2$ Fumarsäure eingesetzt wird.

Zur Herstellung des modifizierten Polyphenylenethers A werden die eingesetzten Komponenten in der Schmelze, im allgemeinen bei 250 bis 350°C, vorzugsweise 265 bis 295°C, miteinander umgesetzt. Hierzu eignen sich besonders Extruder, da in diesen im allgemeinen auch eine gute Durchmischung der Komponenten erzielt wird. Die mittleren Verweilzeiten liegen im allgemeinen im Bereich von 0,5 bis 30 min.,

vorzugsweise von 1 bis 3 min.

Besonders gut für das erfindungsgemäße Verfahren eignen sich Zweischneckenextruder. Die Komponenten werden vorzugsweise gemeinsam eindosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit nachgeschaltetem rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert und das Granulat wird zur Herstellung der erfindungsgemäßen Formmassen eingesetzt.

Prinzipiell ist die Herstellung des modifizierten Polyphenylenethers auch in jedem Reaktionsgefäß, welches eine Reaktion der Komponenten miteinander ermöglicht, durchführbar.

Die Komponente B ist in der erfindungsgemäßen Formmasse zu 3 bis 97, bevorzugt 10 bis 90, besonders bevorzugt 10 bis 60 Gew.-Teilen, bezogen auf die Summe der Komponenten A und B, enthalten.

Es handelt sich um ein Pfropfmischpolymerisat aus einem Butadien-oder Acrylatkautschuk als Pfropfgrundlage, in dessen Gegenwart ein Copolymerisat $B_1$ als Pfropfhülle mit den Monomeren $b_1$ bis $b_4$ hergestellt worden ist.

Der an sich bekannte Butadienkautschuk (EP-A 199 334) sollte eine Glastemperatur [nach K.H. Illers und H. Breuer, Kolloid-Zeitschrift 176, (1961) Seite 110] haben, die unter 0°C liegt. Als Kautschuk kommen beispielsweise in Frage: Polybutadien (vgl. DE-A 14 20 775 und DE-A 14 95 089), daneben auch Copolymerisate aus überwiegend Butadien und Styrol mit Comonomeren wie Isopren, Acrylnitril oder Vinylmethylether.

Als Pfropfgrundlage kommt auch ein an sich aus der EP-A 201 763 bekanntes Acrylesterpolymerisat in Frage, dessen Glastemperatur unter 0°C, bevorzugt unter -30°C, liegt. Diese Polymerisate können in der Hauptsache aufgebaut sein aus Alkylacrylaten mit 1 bis 8 C-Atomen im Alkylrest wie n-Butylacrylat oder 2-Ethyl-hexylacrylat, daneben auch aus bis zu 50, insbesondere 10 bis 20 Gew.%, bezogen auf das Polymerisat, weiterer copolymerisierbarer Monomerer wie Butadien, Isopren, Styrol, Acrylnitril oder Vinylmethylether oder Mischungen davon. Bevorzugt sind diese Acrylesterpolymerisate vernetzt. In diesem Fall enthalten sie 0,1 bis 5, bevorzugt 1 bis 4 Gew.%, bezogen auf das Polymerisat, eines mehrfunktionellen Monomeren, wie Divinylbenzol oder Di-hydro-di-cyclo-pentadienylacrylat.

Das Pfropfmischpolymerisat B ist im allgemeinen aufgebaut aus 30 bis 90, bevorzugt 40 bis 85, insbesondere 55 bis 78 Gew.-% der Pfropfgrundlage und 10 bis 70, bevorzugt 15 bis 60, insbesondere 22 bis 45 Gew.-%, jeweils bezogen auf das Pfropfmischpolymerisat, der Pfropfhülle $B_1$.

Diese ist aus einem Monomerengemisch aus 30 bis 90,9, vorzugsweise 64 bis 79 Gew.% $b_1$, 40 bis 9, bevorzugt 35 bis 20 Gew.% $b_2$, 30 bis 0,1, bevorzugt 10 bis 1,0 Gew.% $b_3$ und 0 bis 30, bevorzugt 0 bis 20, insbesondere 0 Gew.% $b_4$, jeweils bezogen auf die Summe von $b_1$ bis $b_4$, durch Polymerisation in Gegenwart der Pfropfgrundlage entstanden.

$b_1$ ist ein vinylaromatischer Kohlenwasserstoff mit 8 bis 12 C-Atomen, z.B. α-Methylstyrol, p-Methylstyrol oder insbesondere Styrol selbst.

$b_2$ ist ein nitrilgruppenhaltiges ethylenisch ungesättigtes Monomeres mit 3 bis 6 C-Atomen, z.B. Methacrylnitril oder insbesondere Acrylnitril.

Als $b_3$ kann ein ethylenisch ungesättigtes mit $b_1$ und $b_2$ copolymerisierbares Monomeres verwendet werden, das eine Epoxidgruppe

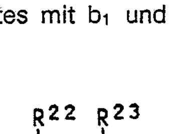,

wobei $R^{22}$ und $R^{23}$ Wasserstoff oder $C_1$-$C_{12}$-Alkylgruppen sind, im Molekül aufweist.

Vorzugsweise werden Monomere verwendet, die mindestens eine Glycidylgruppe tragen, insbesondere Glycidylacrylat und Glycidylmethacrylat. Es eignen sich jedoch auch Glycidylderivate anderer Säuren und Glycidylallyl-und Vinylether.

Als $b_3$ kommen aber auch ethylenisch ungesättigte Monomere in Betracht, die mindestens eine Hydroxylgruppe enthalten. Es kann sich dabei um Verbindungen der allgemeinen Formel V

$CH_2=CR^{16}$-K-OH (V)

handeln, wobei

$R^{16}$ insbesondere Wasserstoff, daneben aber auch $C_1$-$C_{25}$-Alkyl,

K 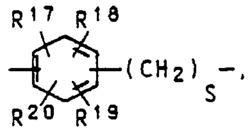 $-\overset{O}{\overset{\|}{C}}-O-L-$,

$-\overset{O}{\overset{\|}{C}}-NR^{16}-L-$, daneben auch

$-CH_2-\underset{OH}{\underset{|}{CH}}-CH_2-$ oder bei halogenhaltigen Formmassen auch $-CH_2-\underset{Cl}{\underset{|}{CH}}-CH_2-$,

$R^{17}$ bis $R^{20}$ Wasserstoff oder Methyl, daneben auch $C_2$-$C_8$-Alkyl, -$NO_2$ oder bei halogenhaltigen Formmassen auch Halogen oder -CN,

S eine ganze Zahl von 0 bis 6, insbesondere 1 bis 2, und

L ein Brückenglied ist.

Als Brückenglied L kommt insbesondere $C_1$-$C_4$-Alkylen, aber auch $C_5$-$C_{25}$-Alkylen, $C_6$-$C_{12}$-Cycloalkylen,

$$-(CH_2)_j-O-[-\underset{\overset{\|}{O}}{C}(CH_2)_5-]_k- ,$$

wobei j = 2 bis 10 und k = 1 bis 10 ist,

$$-(CH_2-CH_2-O-)_h-CH_2-CH_2- ,$$

$$-(CH_2-\underset{CH_3}{\underset{|}{CH}}-O-)_h-CH_2-\underset{CH_3}{\underset{|}{CH}}- \quad \text{oder}$$

$$-(CH_2-CH_2-O-)_h-(CH_2-\underset{CH_3}{\underset{|}{CH}}-O-)_i-CH_2-\underset{R^{21}}{\underset{|}{C}}- ,$$

wobei h, i = 1, 2 oder auch 3 bis 20 ist und $R^{21}$ = H oder $CH_3$ ist, in Betracht.

Besonders bevorzugte Verbindungen sind Hydroxypropylacrylat, Vinylbenzylalkohol oder Glycidylmethacrylat.

Es können auch Gemische der Epoxid-und Hydroxylgruppen tragenden Monomeren verwendet werden.

Als $b_4$ kommen von $b_1$ bis $b_3$ verschiedene, mit $b_1$ und $b_2$ copolymerisierbare ethylenisch ungesättigte Monomere wie Vinylester, Vinylether und (Meth)acrylsäureester, jeweils abgeleitet von $C_1$-$C_{12}$-Alkoholen, (Meth)acrylamide, die am N durch $C_1$-$C_{12}$-Alkylreste substituiert sein können, oder Methacrylsäure, bevorzugt Vinylacetat und Methyl(meth)acrylat oder eine Mischung dieser Monomeren in Betracht.

Die Komponente B leitet sich, wie der Fachmann erkennt, somit von den an sich aus den EP-A 199 334 und EP-A 201 763 und Ullmanns "Encyclopädie der Technischen Chemie", 4. Auflage, Bd. 19, 1980, S. 277 bis 295, bekannten ABS-und ASA-Polymerisaten ab. Sie enthält zusätzlich als wesentliche Komponente $b_3$ in der Pfropfhülle.

Sowohl die Kautschuke als auch die Pfropfmischpolymerisate werden in bekannter Weise in Emulsion oder Lösung hergestellt, wobei die Pfropfung auch in üblicher Art in mehreren Stufen erfolgen kann. Es entstehen Pfropfmischpolymerisate, bei denen die Pfropfhülle in dem Fachmann bekannten Grenzen auf die elastomere Grundlage gepfropft ist.

Die Teilchengrößen der Pfropfmischpolymerisate können den Erfordernissen entsprechend nach bekannten Methoden bestimmt und eingestellt werden, z.B. bei der Emulsionspolymeristion mit Hilfe eines Saatlatex oder durch einen anschließenden Agglomerationsschritt. Üblicherweise sollte die mittlere Teilchen-

größe ($d_{50}$-Wert der integralen Massenverteilung, bestimmt nach der in DE-B 24 27 960 beschriebenen Methode) zwischen 0,1 und 1 µm bei Pfropfmischpolymerisaten, die in bekannter Weise in Emulsion hergestellt wurden, liegen oder zwischen 0,5 und 10 µm bei Produkten, die in bekannter Weise in Lösung hergestellt wurden.

Als weiteren Bestandteil können die erfindungsgemäßen Formmassen zusätzlich als Komponente C einen nicht modifizierten Polyphenylenether enthalten. Dieser entspricht bevorzugt dem in Komponente $a_1$ eingesetzten Polyphenylenether, weshalb hier auf die dortigen Ausführungen zu geeigneten Verbindungen verwiesen wird. Der Anteil der Komponente C kann, falls vorhanden, vom 0,1fachen bis zum 4,0fachen, bevorzugt bis zum 2,0fachen, insbesondere bis zum 1,0fachen der Gewichtsmenge betragen, in der die Komponente A in der erfindungsgemäßen Formmasse vorliegt.

Als weiteren Bestandteil können die erfindungsgemäßen Formmassen zusätzlich die Komponente D enthalten. Geeignet als D sind bevorzugt mit Polyphenylenethern verträgliche vinylaromatische Polymere, wie sie bereits in Komponente $a_1$ beschrieben wurden. Für nähere Einzelheiten sei deshalb auf die Ausführungen zur Komponente $a_1$ verwiesen.

Der Anteil an D kann vom 0,1fachen bis zum 4,0fachen, bevorzugt bis zum 2,0fachen der Gewichtsmenge der Summe der in der Formmasse vorliegenden Komponente A und, falls vorhanden, C betragen. Bei halogenfreien, selbstverlöschenden Formmassen ist es insbesondere günstig, geringere Mengen an D, nämlich bis zum 0,5fachen der Gewichtsmenge der Summe der in der Formmasse vorliegenden Komponente A und, falls vorhanden, C zu verwenden.

Die Komponente D kann auch schlagzäh modifiziert sein. Solche Polymere sind dem Fachmann als - schlagzähes Polystyrol (HIPS) bekannt. Dabei werden die vinylaromatischen Polymeren in Gegenwart eines Schlagzähmodifiers hergestellt. Als kautschukartige Polymere seien beispielsweise Polybutadien-und Polyisopren-Kautschuk genannt.

Die üblicherweise zur Herstellung schlagzäh modifizierter Styrolpolymerisate angewandten Verfahren sind die Polymerisation in Masse oder Lösung, wie beispielsweise in der US-Patentschrift 2 694 692 beschrieben. Die schlagzäh modifizierten Styrolpolymerisate (HIPS) weisen im allgemeinen einen Schmelzindex (MFI (200°C/5 kg), gemessen nach DIN 53 735) von 2 bis 30, insbesondere von 2,5 bis 20 g/10 min auf.

In einigen Fällen hat es sich als vorteilhaft erwiesen, wenn die Formmassen zusätzlich mindestens eine der Komponenten E oder F enthalten. Der Anteil an E in der Formmasse kann vom 0,1fachen bis zum 4,0fachen, bevorzugt bis zum 2,0fachen der Gewichtsmenge betragen, in der die Komponente B in der erfindungsgemäßen Formmasse vorliegt. Bei halogenfreien, selbstverlöschenden Formmassen ist es insbesondere günstig, geringere Mengen an E, nämlich bis zum 0,6fachen der Gewichtsmenge der in der Formmasse vorliegenden Komponente B zu verwenden.

E ist ein von $B_1$ und D verschiedenes Styrolacrylnitrilcopolymerisat. Es kann aus mindestens 50 Gew.%, bezogen auf E, eines vinylaromatischen Monomeren mit 8 bis 12 C-Atomen, wie α-Methylstyrol, para-Methylstyrol oder insbesondere Styrol selbst, aus bis zu 50, bevorzugt 15 bis 40, insbesondere 20 bis 38 Gew.-%, bezogen auf E, eines nitrilgruppenhaltigen, ethylenisch ungesättigten Monomeren mit 3 bis 6 C-Atomen, insbesondere Acrylnitril oder Methacrylnitril und aus bis zu 10 Gew.%, bezogen auf E, weiterer, copolymerisierbarer Monomerer wie Methacrylsäureester, Acrylsäureester z.B. Methylmethacrylat oder Ethylmethacrylat, Butylacrylat oder 2 Ethylhexylacrylat sowie Methacrylamiden oder Gemischen dieser Verbindungen bestehen.

Diese SAN-Copolymerisate sind an sich bekannt und im Handel erhältlich. Sie werden in üblicher Weise in Lösung, Emulsion oder Masse kontinuierlich oder diskontinuierlich hergestellt. Die Durchschnittsmolekulargewichte (Gewichtsmittel $\overline{M}_w$), bestimmt durch Gelpermeationschromatographie, liegen im allgemeinen zwischen 10 000 und 1 Million.

F ist eine schlagzäh modifizierende Komponente. Der Anteil an F in der Formmasse kann vom 0,1fachen bis zum 4,0fachen, bevorzugt bis zum 2,0fachen, insbesondere bis zum 1,0fachen der Gewichtsmenge betragen, in der die Komponente B in der erfindungsgemäßen Formmasse vorliegt. Bei halogenfreien, selbstverlöschenden Formmassen ist es insbesondere günstig, geringere Mengen an F, nämlich bis zum 0,6fachen der Gewichtsmenge der in der Formmasse vorliegenden Komponente B zu verwenden.

Bei der Komponente F handelt es sich um ein Pfropfmischpolymerisat, das wie die Komponente B aufgebaut ist, mit dem Unterschied, daß das die Pfropfhülle von F bildende Copolymerisat frei von dem Monomeren $b_3$ ist. Das Copolymerisat der Pfropfhülle ist üblicherweise aus einem Monomergemisch aus 50 bis 90, bevorzugt 65 bis 85 Gew.% des Monomeren $b_1$, 10 bis 50, bevorzugt 15 bis 35 Gew.% $b_2$ und 0 bis 30, bevorzugt 0 bis 20, insbesondere 0 Gew.%, jeweils bezogen auf die Monomermischung, $b_4$ durch Polymerisation in Gegenwart der Pfropfgrundlage entstanden.

Im übrigen entspricht F, auch was die Herstellung, den Pfropfgrad und die Teilchengröße angeht, der

bei B gegebenen Beschreibung, so daß eine weitere Erläuterung hier entbehrlich ist.

Die Komponenten E und F können auch als handelsübliche Gemische eingesetzt oder vor Herstellung der erfindungsgemäßen Formmassen vorgemischt werden.

Neben den in der Komponente B, D und F gegebenenfalls vorhandenen, gepfropften Kautschuken, wie Butadien-, Acrylat-oder Styrolbutadienkautschuk können diese auch ungepfropft als Komponente G zugesetzt werden. Als Kautschuke G seien weiter erwähnt Polybuten-Kautschuk, hydrierter Styrolbutadien-, Acrylnitrilbutadien-, Ethylenpropylen-, Polyisopren-Kautschuk, styrolgepfropfte Ethylenpropylen-Kautschuke, thermoplastische Ethylen-Propylen-Kautschuke, thermoplastische Polyester-Elastomere, Ethylenkautschuke und Ionomere, Styrol-Butadien-Blockcopolymere einschließlich AB-, ABA-, ABA-verschmiert-(taper)-, ABAB-, ABAB-verschmierte Block-Copolymere, Stern-Block-Copolymere und ähnliche, analoge Isopren-Blockpolymerisate und insbesondere (teil)hydrierte Blockcopolymere. Die Komponente G kann in Mengen bis 40, vorzugsweise 1 bis 25 Gew.%, bezogen auf die Formmasse, in den erfindungsgemäßen Formmassen vorhanden sein.

Zur Flammfestausrüstung können die erfindungsgemäßen Formmassen, wenn sie halogenfrei sind, 1 bis 40, bevorzugt 2 bis 25, insbesondere 5 bis 20 Gew.%, bezogen auf die Formmasse, einer Phosphor enthaltenden Verbindung H enthalten.

Es handelt sich dabei um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Walter de Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (±0), hypophosphoriger Säure (+1), phosphoriger Säure (+3), Hypodiphosphorsäure (+4) und Phosphorsäure (+5) ab.

Aus der großen Zahl von geeigneten phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin u.a. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a. Besonders geeignet ist Tetranaphthyldiphosphin.

Phosphorverbindungen der Wertigkeitsstufe -1 leiten sich vom Phosphinoxid ab. Beispiele sind Triphenylphosphinoxid, Tritolylphosphinoxid, Trinonylphosphinoxid, Trinaphthylphosphinoxid. Bevorzugt ist Triphenylphosphinoxid.

Phosphor der Wertigkeitsstufe ±0 ist der elementare Phosphor. In Frage kommen roter und schwarzer Phosphor. Bevorzugt ist roter Phosphor. Phosphorverbindungen der "Oxidationsstufe" +1 sind z.B. Hypophosphite. Sie können Salzcharakter haben oder rein organischer Natur sein.

Beispiele sind Calciumhypophosphit und Magnesiumhypophosphit, danben auch komplexe Hypophosphite oder Doppelhypophosphite, oder organische Hypophosphite wie Cellulosehypophosphitester oder Ester der hypophosphorigen Säuren mit Diolen, wie z.B. von 1,10-Dodecyldiol. Auch substituierte Phosphinsäuren und deren Anhyride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid. Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)-phosphinsäureamide, wie z.B. Diphenylphosphinäsure-dimethylamid und Sulfonamidoaryl(alkyl)-phosphinsäurederivate, wie z.B. p-Tolylsulfonamidodiphenylphosphinsäure. Bevorzugt eingesetzt werden Hydrochinon-und Ethylenglykol-bis-(diphenylphosphinsäure)ester.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit, Tris-(4-decylphenyl)phosphit, Tris(2,4-di-tert.-butylphenyl)phosphit oder Phenyldidecylphosphit u.a. enthalten. Es können aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Bevorzugt werden Methylneopentylphosphonat (Methanphosphonsäuremethylester) und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl-und arylsubstituierte Phosphate in Betracht. Beispiele sind Phenylbisdodecylphosphat, Phenylethylhydrogenphosphat, Phenyl-bis-(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)-phenylphosphat, Phenylmethylhydrogenphosphat, Di(dodecyl)-p-tolylphosphat, p-Tolyl-bis(2,5,5-trimethylhexyl)phosphat, 2-Ethylhexyldiphenylphosphat. Besonders geeignet sind Phosphorverbindungen, bei denen jeder Rest ein Aryloxi-Rest ist. Ganz besonders geeignet ist Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie es beispielsweise in der DE-A 20 36 173 beschrieben ist. Das Molekulargewicht, gemessen durch Dampfdruckosmometrie in Dimethylformamid, der Polyphospholinoxide soll im Bereich von 500 bis 7 000, vorzugsweise im Bereich von 700 bis 2 000 liegen.

Der Phosphor besitzt hierbei die Oxidationsstufe -1.

Ferner können anorganische Koordinationspolymere von Aryl(Alkyl)-phosphinsäuren, eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen eingesetzt werden, die durch die Reaktion eines Phosphonsäurechlorids, wie z.B. Phenyl-, Methyl-, Propylphosphonsäuredichlorid mit bifunktionellen Phenolen, wie z.B. Hydrochinon, Resorcin, 2,3,5-Trimethylhydrochinon, Bisphenol-A, Tetramethylbisphenol-A entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi-und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere halogenfreie Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Ganz besonders bevorzugt zum Einsatz gelangen Triphenylphosphinoxid, Triphenylphosphat, Methylneopentylphosphat (Methanphosphonsäureneopentylester), Hydrochinon-bis-(diphenylphosphinsäure)ester und Mobil Antiblaze 19.

Darüber hinaus können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 40, insbesondere nicht mehr als 20 Gew.%, bezogen auf die Formmasse.

Als Zusatzstoffe seien genannt übliche Hitze-und Lichtstabilisatoren, Gleit-und Entformungsmittel, Färbemittel, wie Farbstoffe und Pigmente in üblichen Mengen. Weitere Zusatzstoffe sind Verstärkungsmittel wie Glasfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum, Kreide, ferner bei halogenhaltigen Formmassen Flammschutzmittel, z.B. bromierte oder chlorierte organische Verbindungen, gegebenenfalls in Mischung mit Antimon-Verbindungen.

Die Herstellung der erfindungsgemäßen thermoplastischen Formmassen erfolgt zweckmäßigerweise durch Mischen der Komponenten bei Temperaturen im Bereich von 200 bis 320°C, vorzugsweise 250 bis 300°C in üblichen Mischvorrichtungen, wie z.B. Knetern, Banburymischern und Einschneckenextrudern, vorzugsweise in einem Zweischneckenextruder. Um eine möglichst homogene Formmasse zu erhalten, ist eine intensive Durchmischung notwendig, was in bekannter Weise erreicht werden kann. Die mittleren Verweilzeiten beim Mischen liegen zweckmäßigerweise im Bereich von 0,5 bis 30 min., vorzugsweise von 1 bis 5 min. Die Reihenfolge des Mischens der Komponenten kann variiert werden, es können zwei oder gegebenenfalls drei Komponenten vorgemischt sein oder es können auch alle Komponenten gemeinsam gemischt werden.

Bei der Herstellung der Formmassen können einzelne Komponenten miteinander reagieren, so daß im Endprodukt keine reine Mischung der Komponenten mehr vorliegt.

Aus den erfindungsgemäßen Formmassen lassen sich durch Spritzgießen oder Extrusion Formkörper mit vorteilhaften Eigenschaften herstellen.

Unter einer selbstverlöschenden Formmasse im Sinne dieser Erfindung wird eine flammfest ausgerüstete Formmasse verstanden, die in die im folgenden beschriebenen Brandklassen UL 94 V0, V1 oder 5V

eingeordnet werden kann.

Die erfindungsgemäßen thermoplastischen Formmassen zeichnen sich durch eine gute Verarbeitbarkeit und Wärmeformbeständigkeit aus. Weitere Vorteile liegen in den guten mechanischen Eigenschaften der Formmasse und der daraus hergestellten Formkörper, daneben auch in deren Oberflächenglanz.

Die in den Beispielen und Vergleichsversuchen erwähnten Tests wurden wie folgt durchgeführt:

1. Die Flammschutzprüfung erfolgt im vertikalen Brandtest nach den Vorschriften der Unterwriter Laboratories zwecks Einordnung in eine der Brandklassen UL 94 V0, V1, V2 oder 5V.

Die Einstufung eines flammgeschützten Thermoplasten in die Brandklasse UL 94 V0 erfolgt, wenn folgende Kriterien erfüllt sind: Bei einem Satz von 5 Proben der Abmessungen 127×12,7×3,16 mm dürfen alle Proben nach zweimaliger Beflammung von 10 s Zeitdauer mit einer offenen Flamme (Höhe 19 mm) nicht länger als 10 s nachbrennen. Die Summe der Nachbrennzeiten bei 10 Beflammungen von 5 Proben darf nicht größer sein als 50 s. Es darf kein brennendes Abtropfen, vollständiges Abbrennen oder ein Nachglühen von länger als 30 s erfolgen. Die Einstufung in die Brandklasse UL 94 V1 erfordert, daß die Nachbrennzeiten nicht länger als 30 s sind und daß die Summe der Nachbrennzeiten von 10 Beflammungen von 5 Proben nicht größer als 250 s ist. Das Nachglühen darf nie länger als 60 s dauern. Die übrigen Kriterien sind identisch mit den oben erwähnten. Eine Einstufung in die Brandklasse UL 94 V2 erfolgen dann, wenn es bei Erfüllung der übrigen Kriterien zur Einstufung UL 94 V1 zu brennendem Abtropfen kommt.

Eine Einstufung in die Brandschutzklasse UL 94 5V erfolgen dann, wenn folgende Kriterien erfüllt sind:

Die Nachbrenn-oder Nachglühzeit der Proben darf jeweils nach der letzten Beflammung 60 s nicht überschreiten. Dabei wird jede Probe fünfmal mit einer Flamme von 127 mm Höhe und einem inneren blauen Kegel von 38 mm Höhe 5 s lang beflammt. Zwischen zwei aufeinanderfolgenden Beflammungen liegt jeweils ein Intervall von 5 s. Es darf weder brennendes noch nicht brennendes Abtropfen noch vollständiges Abbrennen eintreten.

2. Die (Kerb)schlagzähigkeiten wurden nach DIN 53 453 gemessen.

Zur Ausführung von Beispielen und Vergleichsversuchen wurden folgende Komponenten verwendet:

Komponente A

9,4 kg Poly(2,6-dimethyl-1,4-phenylen)ether mit einer relativen Viskosität von 0,61 (gemessen in 1 gew.%iger Lösung in $CHCl_3$ bei 25°C), 0,5 kg Polystyrol (PS 144 C, Schmelzflußindex MFI bei 200°C/5 kg Belastung = 24 g/10 min) und 0,1 kg Fumarsäure wurden in einen Zweischneckenextruder (ZSK 53; Werner & Pfleiderer) dosiert, in einem ersten Teil unter Verwendung von Knetelementen bei 280°C aufgeschmolzen, in einem zweiten Teil unter Kneten und Verwendung von Knetelementen bei 280°C umgesetzt und anschließend in einer Entgasungszone bei 280°C durch Anlagen von Vakuum entgast. Die mittlere Verweilzeit im Extruder betrug 3 min. Die austretende Schmelze wurde durch ein Wasserbad geleitet, granuliert und getrocknet.

Komponente B

Die in Tabelle 1 zusammengefaßten Komponenten B wurden nach der folgenden allgemeinen Arbeitsvorschrift hergestellt:

a) Butadienkautschuk

Die Herstellung des Butadienkautschuks erfolgte durch Polymerisation von 60 Gew.-Teilen Butadien in Gegenwart einer Lösung von 0,5 Gew.-Teilen tert.-Dodecylmercaptan, 0,7 Gew.-Teilen Natrium-$C_{14}$-$C_{18}$-Alkylsulfonat als Emulgator, 0,2 Gew.-Teilen Kaliumperoxidsulfat und 0,2 Gew.-Teilen Natriumpyrophosphat

in 80 Gew.-Teilen Wasser bei 65°C. Nach Beendigung der Polymerisation wurde der Polymerisations-Autoklav entspannt. Der Umsatz betrug 98 %.

Es wurde ein Polybutadien-Latex erhalten, dessen mittlere Teilchengröße ($d_{50}$-Wert) bei 0,1 µm liegt. Dieser Latex wurde durch Zusatz von 25 Gew.-Teilen einer wäßrigen Dispersion eines Copolymeren aus 96 Gew.-% Ethylacrylat und 4 Gew.-% Acrylsäureamid mit einem Feststoffgehalt von 10 Gew.-% agglomeriert, wobei ein Polybutadien-Latex mit einer mittleren Teilchengröße ($d_{50}$-Wert) von 0,3 bis 0,4 µm entstand.

b) Acrylatkautschuk

Die Herstellung des Acrylatkautschuks verlief über zwei Schritte. Zunächst wurde ein Saatlatex hergestellt, mit dem anschließend der die Pfropfgrundlage bildende Acrylatkautschuk erzeugt wurde.

Herstellung des Saatlatex

16 Gew.-Teile Butylacrylat und 0,4 Gew.-Teile Di-cyclo-dihydro-pentadienylacrylat wurden in 150 Gew.-Teilen Wasser unter Zusatz von 0,5 Gew.-Teilen des Natriumsalzes einer $C_{12}$-$C_{18}$-Paraffinsulfonsäure, 0,3 Gew.-Teilen Kaliumperoxid, 0,3 Gew.-Teilen Natriumhydrogencarbonat und 0,15 Gew.-Teilen Natriumpyrophosphat unter Rühren auf 60°C erwärmt. 10 Minuten nach dem Anspringen der Polymerisationsreaktion wurden innerhalb von 3 Stunden eine Mischung aus 82 Gew.-Teilen Butylacrylat und 1,6 Gew.-Teilen Di-cyclo-dihydro-pentadienyl-acrylat zugegeben. Nach Beendigung der Monomerzugabe ließ man noch 1 Stunde nachreagieren. Der erhaltene Latex des vernetzten Butylacrylat-Polymerisats hatte einen Feststoffgehalt von 40 Gew.-%. Die mittlere Teilchengröße ($d_{50}$-Wert) wurde zu 0,2 µm ermittelt.

Herstellung des Acrylatkautschuks

Zu einer Vorlage aus 2,5 Gew.-Teilen des vorstehend beschriebenen Saatlatex wurden nach Zugabe von 50 Gew.-Teilen Wasser und 0,1 Gew.-Teilen Kaliumperoxidsulfat im Verlauf von 3 Stunden einerseits eine Mischung aus 49 Gew.-Teilen Butylacrylat und 1 Gew.-Teil Di-cyclodihydro-pentadienylacrylat und andererseits eine Lösung von 0,5 Gew.-Teilen des Natriumsalzes einer $C_{12}$-$C_{18}$-Paraffinsulfonsäure in 25 Gew.-Teilen Wasser bei 60°C dosiert. Nach Zulaufende wurde 2 Stunden nachpolymerisiert. Der erhaltene Latex des vernetzten Butylacrylat-Polymerisats hatte einen Feststoffgehalt von 40 Gew.-%. Die mittlere Teilchengröße ($d_{50}$-Wert) des Latex wurde zu 0,4 µm ermittelt.

c) Pfropfmischpolymerisate B

150 Gew.-Teile des Latex a) bzw. b) wurden mit 15 bis 100 Gew.-Teilen Wasser verdünnt und unter Zusatz von 0,3 Gew.-Teilen eines Natrium-$C_{14}$-$C_{18}$-Alkylsulfonats und 0,2 Gew.-Teilen Kaliumperoxidisulfat mit den in Tabelle 1 angegebenen Monomerengemischen bei 70°C innerhalb von 5 bis 7 Stunden gepfropft. Der mittlere Teilchendurchmesser ($d_{50}$-Wert) der Polymerisate B(1) und B(2) lag zwischen 0,4 und 0,5 µm.

Die Produkte wurden mit Calciumchlorid-Lösung aus der Dispersion gefällt, mit Wasser gewaschen und im warmen Luftstrom getrocknet.

Tabelle 1: Pfropfmischpolymerisate B

| Pfropfgrundlage Art | Pfropfgrundlage Menge[1)] | Pfropfhülle Monomeres 3 | Pfropfhülle Gewichtsverhältnis Styrol zu Acrylnitril zu Monomerem 3 in der Pfropfhülle | Pfropfhülle Menge[1)] |
|---|---|---|---|---|
| B(1) a) | 60 | Hydroxypropylacrylat | 73/25/2 | 40 |
| B(2) b) | 60 | Glycidylmethacrylat | 72/25/3 | 40 |

1) Gew.-%, bezogen auf Pfropfmischpolymerisat

B(V) Zum Vergleich wurde ein Pfropfmischpolymerisat gemäß EP-A 170 946 aus PPE und einem Styrolacrylnitrilpolymerisat hergestellt.

100 g des in A verwendeten PPE's wurden mit Dimethyldichlorsilan in Toluol unter Verwendung von Tributylamin als Säurefänger umgesetzt. Das Umsetzungsprodukt wurde anschließend zu 100 g eines Styrolacrylnitrilpolymerisats (bestehend aus 62 Gew.% Styrol, 35 Gew.% Acrylnitril und 3 Gew.% Hydroxybutylacrylat, mit einem Gewichtsmittel des Molekulargewichts von 65 000, hergestellt durch kontinuierliche Polymerisation) unter Verwendung von Tributylamin als Säurefänger zudosiert. Es wurde wie üblich aufgearbeitet.

Komponente C

Poly(2,6-dimethyl-1,4-phenylen)ether mit einer relativen Viskosität von 0,61 (gemessen in 1 gew.%iger Lösung in $CHCl_3$ bei 25°C).

Komponente E

Copolymerisat aus 75 Gew.-% Styrol und 25 Gew.-%, jeweils bezogen auf das Copolymerisat, Acrylnitril mit einem $\overline{M}_w$ von 160 000 g/mol, bestimmt durch Gelpermeationschromatographie.

Komponente F

Emulsionspfropfmischpolymerisat aus 60 Gew.-% Polybutadien mit einer Glastemperatur von unter 0°C und 40 Gew.-%, jeweils bezogen auf das Pfropfmischpolymerisat, einer Pfropfhülle aus 75 Gew.-% Styrol und 25 Gew.-% Acrylnitril, jeweils bezogen auf die Pfropfhülle.

Komponente G

Styrol-Butadien-Styrol-Dreiblockcopolymer mit einem Styrolgehalt von 30 Gew.-% (Cariflex®TR 1102) (® = eingetragenes Warenzeichen der Fa. Shell), Gewichtsmittel des Molekulargewichts $\overline{M}_w$ = 60 000.

Komponente H
H (1): Triphenylphosphinoxid
H (2): Triphenylphosphat

Beispiele 1 bis 6 und Vergleichsversuche 1* bis 2*

In der folgenden Tabelle 2 sind Beispiele und Vergleichsversuche von thermoplastischen Formmassen aufgeführt. Die Formmassen wurden durch Aufschmelzen und Mischen der angegebenen Komponeten in den angegebenen Mengen in einem Zweischneckenextruder bei 280°C und 3 Minuten Verweilzeit und anschließendes Granulieren erhalten.

Beispiele 7 bis 11 und Vergleichsversuche 3* bis 5*

In der folgenden Tabelle 3 sind Beispiele und Vergleichsversuche von halogenfreien selbstverlöschenden thermoplastischen Formmassen aufgeführt. Die Formmassen wurden durch Aufschmelzen und Mischen der angegebenen Komponenten in den angegebenen Mengen in einem Zweischneckenextruder bei 280°C und 3 Minuten Verweilzeit und anschließendes Granulieren erhalten.

Tabelle 2

| Bsp. | Vergleichsversuch | Komponenten, Mengenangabe in kg A | B Art, | Menge | C | E | F | G | Kerbschlagzähigkeit bei +23°C [kJ/m²] |
|---|---|---|---|---|---|---|---|---|---|
| 1 | | 4,4 | B(1) | 2,3 | | 2,3 | | 1,0 | 18 |
| | 1* | | | | 4,4 | 2,3 | 2,3 | 1,0 | 2 |
| 2 | | 4,5 | B(2) | 2,0 | | 2,3 | | 1,2 | 17 |
| 3 | | 2,5 | B(2) | 2,2 | 2,0 | 2,3 | | 1,0 | 17 |
| | 2* | | | | 4,5 | 2,3 | 2,2 | 1,0 | 1 |
| 4 | | 2,5 | B(1) | 3,5 | | 3,5 | | 0,5 | 19 |
| 5 | | 2,5 | B(2) | 2,0 | | 3,5 | 1,5 | 0,5 | 16 |
| 6 | | 4,5 | B(1) | 1,5 | | 2,7 | 1,2 | 0,9 | 17 |

Tabelle 3

| Bsp. | Vergleichsversuche | A | B Art | B Menge | C | E | F | G | H | Brandschutztest UL 94 nicht bestanden: n.b. | Kerbschlagzähigkeit bei +23°C [kJ/m²] |
|---|---|---|---|---|---|---|---|---|---|---|---|
| 7 | | 4,7 | B(1) | 2,1 | | 2,0 | | | 1,2 2) | V0 | 9 |
| | 3* | | | | 4,7 | 2,0 | 2,1 | | 1,2 2) | n.b. | 1 |
| | 4* | | B(V) | 1,4 | 4,0 | 1,7 | 1,7 | | 1,2 2) | V0 | 5 |
| 8 | | 4,0 | B(2) | 1,9 | | 2,0 | | 0,8 | 1,3 1) | 5V | 15 |
| 9 | | 3,6 | B(2) | 2,0 | | 2,0 | | 1,0 | 1,4 1) | V0 | 16 |
| 10 | | 2,0 | B(2) | 1,5 | 1,6 | 2,0 | 0,5 | 0,8 | 1,6 1) | V0 | 13 |
| 11 | | 5,0 | B(2) | 1,3 | | 1,2 | | 1,2 | 1,3 2) | 5V | 16 |
| | 5* | | | | 5,0 | 1,2 | 1,3 | 1,2 | 1,3 2) | n.b. | 2 |

1) H(1)
2) H(2)

**Ansprüche**

1. Thermoplastische Formmassen, enthaltend als wesentliche Komponenten

A) 3 bis 97 Gew.-Teile, bezogen auf die Summe der Komponenten A und B, eines in der Schmelze modifizierten Polyphenylenethers aus

$a_1$) 70 bis 99,95 Gew.-%, bezogen auf A, eines Polymeranteils, der mindestens 30 Gew.-%, bezogen auf $a_1$, Polyphenylenether und höchstens 70 Gew.-%, bezogen auf $a_1$, eines vinylaromatischen Polymeren enthält,

$a_2$) 0,05 bis 10 Gew.-%, bezogen auf A,

$a_{21}$) eines amidgruppenhaltigen Monomeren mit einer polymerisierbaren Doppelbindung,
$a_{22}$) eines lactamgruppenhaltigen Monomeren mit einer polymerisierbaren Doppelbindung und/oder
$a_{23}$) einer $\alpha,\beta$-ungesättigten Dicarbonylverbindung und

$a_3$) 0 bis 20 Gew.%, bezogen auf A, eines weiteren Comonomeren, das unter den Herstellungsbedingungen mit $a_1$ reagieren kann,

und

B) 3 bis 97 Gew.-Teile, bezogen auf die Summe von A und B, eines Pfropfmischpolymerisates aus 30 bis 90 Gew.-%, bezogen auf B, eines Butadien-oder Acrylatkautschukes mit einer Glastemperatur von unter 0°C als Pfropfgrundlage und 10 bis 70 Gew.-%, bezogen auf B, eines in Gegenwart der Pfropfgrundlage aus

- 30 bis 90,9 Gew.-% eines vinylaromatischen Kohlenwasserstoffs mit 8 bis 12 C-Atomen ($b_1$),

- 9 bis 40 Gew.-% eines nitrilgruppenhaltigen ethylenisch ungesättigten Monomeren mit 3 bis 6 C-Atomen ($b_2$),

- 0,1 bis 30 Gew.-%, eines ethylenisch ungesättigten Monomeren $b_3$ mit mindestens einer Epoxid-oder Hydroxylgruppe oder eines Gemisches dieser Monomerer und

- 0 bis 30 Gew.%, jeweils bezogen auf die Summe von $b_1$ bis $b_4$, mindestens eines von $b_1$ bis $b_3$ verschiedenen, copolymerisierbaren, ethylenisch ungesättigten Monomeren $b_4$,

hergestellten Copolymerisates $B_1$ als Pfropfhülle, wobei die Summe der Komponenten A und B 100 Gew.-Teile ergibt.

2. Selbstverlöschende thermoplastische Formmassen nach Anspruch 1, dadurch gekennzeichnet, daß sie kein Halogen und 1 bis 40 Gew.%, bezogen auf die Formmasse, einer Phosphor enthaltenden Verbindung H enthalten.

3. Thermoplastische Formmassen nach den Ansprüchen 1 bis 2, dadurch gekennzeichnet, daß die Komponente $a_{21}$ eine Verbindung der allgemeinen Formel I oder II ist

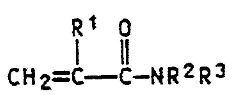

(I)

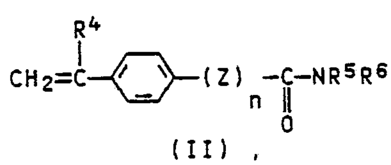

(II) ,

wobei $R^1$, $R^2$, $R^3$, $R^4$, $R^5$ und $R^6$ Wasserstoff, Alkyl-, Cycloalkylgruppen mit bis zu 12 C-Atomen oder Arylgruppen und Z Alkylengruppen mit 1 bis 12 C-Atomen darstellen und n den Wert 0 oder 1 hat.

4. Thermoplastische Formmassen nach den Ansprüchen 1 bis 3, dadurch gekennzeichnet, daß die Komponente $a_{22}$ eine Verbindung der allgemeinen Formel III ist

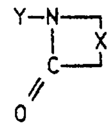 (III) ,

wobei X eine lineare verzweigte Alkylengruppe mit 2 bis 15 C-Atomen darstellt und Y die allgemeine Formel

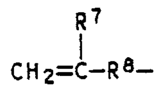

hat

wobei $R^7$ Wasserstoff, eine Alkyl-oder Alkoxygruppe mit 1 bis 4 C-Atomen und $R^8$ einen der nachstehenden zweiwertigen Reste

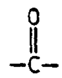 ,

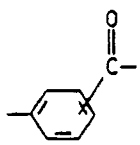 oder

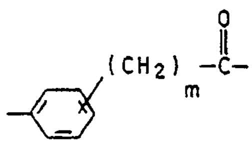 ,

wobei m eine ganze Zahl von 1 bis 4 ist, darstellen.

5. Thermoplastische Formmassen nach den Ansprüchen 1 bis 4, dadurch gekennzeichnet, daß die Komponente $a_{23}$ eine Verbindung der allgemeinen Formel IV ist

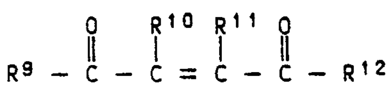 (IV)

wobei

$R^9$ und $R^{12}$ Hydroxylgruppen, Aroxy-, Alkoxy-, Aralkoxy-oder Cycloalkoxygruppen mit bis zu 12 C-Atomen, $-NR^{13}R^{14}$ oder gemeinsam -O-oder $-NR^{13}-$,

$R^{10}$ und $R^{11}$ Wasserstoff oder, wenn $R^{10}$ oder $R^{11}$ Wasserstoff ist, eine Alkyl-oder Cycloalkylgruppe mit bis zu 12 C-Atomen oder eine Arylgruppe, gemiensam eine Alkylengruppe mit 4 C-Atomen oder bei halogenhaltigen Formmassen auch Chlor,

$R^{13}$ und $R^{14}$ Wasserstoff, Alkyl-oder Cycloalkylgruppen, Aralkyl-oder Arylgruppen mit bis zu 12 C-Atomen, die ihrerseits durch $C_1$-$C_4$-Alkyl-oder Alkoxygruppen substituiert sein können, darstellen.

6. Thermoplastische Formmassen nach den Ansprüchen 1 bis 5, dadurch gekennzeichnet, daß das mindestens eine Epoxidgruppe tragende Monomere die Struktureinheit

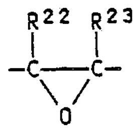

im Molekül enthält, wobei $R^{22}$ und $R^{23}$ Wasserstoff oder $C_1$-$C_{12}$-Alkylgruppen sind.

7. Thermoplastische Formmassen nach den Ansprüchen 1 bis 6, dadurch gekennzeichnet, daß das mindestens eine Hydroxylgruppe tragende Monomere eine Verbindung der allgemeinen Formel V

$CH_2 = CR^{16}$-K-OH (V)

ist, wobei

$R^{16}$ Wasserstoff oder $C_1$-$C_{25}$-Alkyl,

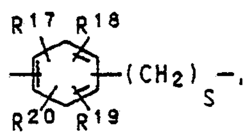, 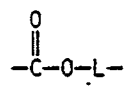,

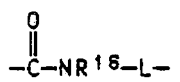 oder

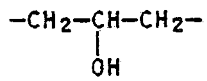 ,

$R^{17}$ bis $R^{20}$ Wasserstoff, $C_1$-$C_8$-Alkyl, -CN oder $-NO_2$,

S eine ganze Zahl von 0 bis 6 und

L ein Brückenglied ist.

8. Verfahren zur Herstellung von thermoplastischen Formmassen gemäß den Ansprüchen 1 bis 7 dadurch Mischen der Komponenten bei einer Temperatur im Bereich von 200 bis 320°C während 0,5 bis 30 Minuten.